**Europäisches Patentamt**

**European Patent Office**

**Office européen des brevets**

(19)

(11) Veröffentlichungsnummer : **0 282 515 B1**

(12) **EUROPÄISCHE PATENTSCHRIFT**

(45) Veröffentlichungstag der Patentschrift :
**04.12.91 Patentblatt 91/49**

(51) Int. Cl.⁵ : **G01M 11/02**

(21) Anmeldenummer : **87905588.7**

(22) Anmeldetag : **30.08.87**

(86) Internationale Anmeldenummer :
**PCT/DE87/00385**

(87) Internationale Veröffentlichungsnummer :
**WO 88/01735 10.03.88 Gazette 88/06**

(54) **EINRICHTUNG ZUR MESSUNG DER REFRAKTIONSEIGENSCHAFTEN VON BRILLENGLÄSERN.**

(30) Priorität : **01.09.86 DE 3629676**

(43) Veröffentlichungstag der Anmeldung :
**21.09.88 Patentblatt 88/38**

(45) Bekanntmachung des Hinweises auf die
Patenterteilung :
**04.12.91 Patentblatt 91/49**

(84) Benannte Vertragsstaaten :
**AT CH DE FR GB IT LI**

(56) Entgegenhaltungen :
**DE-B- 1 166 502**
**US-A- 1 542 112**
**US-A- 1 726 820**
**US-A- 3 445 169**
**US-A- 3 519 357**

(73) Patentinhaber : **G. RODENSTOCK
INSTRUMENTE GMBH
Drachenseestr. 10 - 12
W-8000 München 70 (DE)**

(72) Erfinder : **WILMS, Karl-Heinz
Hans-Bierling-Strasse 47
W-8080 Emmering (DE)**

(74) Vertreter : **Münich, Wilhelm, Dr. et al
Kanzlei Münich, Steinmann, Schiller
Willibaldstrasse 36/38
W-8000 München 21 (DE)**

EP 0 282 515 B1

## Beschreibung

Die Erfindung bezieht sich auf eine Einrichtung zur Messung der Refraktionseigenschaften von Brillengläsern gemäß dem Oberbegriff des Patentanspruchs 1.

Einrichtungen gemäß dem Oberbegriff des Patentanspruchs 1 werden auch als Scheitel-Brechwertmesser bezeichnet und sind in den verschiedensten Ausführungen, beispielsweise als automatische Scheitel-Brechwertmesser, bei denen ein Testobjekt abgebildet wird, oder als Projektions- oder Fernrohr-Scheitel-Brechwertmesser usw. bekannt. Einen nicht abschließenden Überblick über die verschiedenen möglichen Bauformen gibt der Artikel "Geräte zur Messung des Scheitelbrennwertes" in Augenoptik, 1984, S. 67 bis 70 sowie die Veröffentlichung "Aufbau und Funktion von Meßgeräten zur automatischen Messung des Scheitelbrechwerts" In Deutsche Optiker-Zeitung 3/1980, S.9-21.

Die bekannten Scheitel-Brechwertmesser arbeiten in der Regel mit parallelem Strahlengang und bestimmen den sogenannten Fernscheitelbrechwert. Bei der Messung von Mehrstärkengläsern mit derartigen Scheitel-Brechwertmessern ergibt sich ein prinzipieller Meßfehler. Hierzu wird auf die Ausführungen von Dr. W. Roos, beispielsweise in Süddeutsche Optikerzeitung, 1953 oder auf den als Sonderdruck erschienenen Artikel "Über den strahlengang im Nahteil von Zweistärkengläsern", ebenfalls von Dr. W. Roos, verwiesen.

Zur Behebung dieses prinzipiellen Meßfehlers ist ein scheitel-Brechwertmesser vorgeschlagen worden, bei dem das Glas um einen 25 mm hinter der augenseitigen Fläche befindlichen Achsenpunkt geschwenkt werden kann. Dieser scheitelbrechwertmesser ist kurz in dem Artikel "Brillengläser mit gleitender optischer Wirkung" von Dr. Josef Reiner, in südd. Optikerzeitung, 1961, s. 114 f. und inbesondere s. 116 angesprochen. Eine Bedeutung für die Praxis haben derartige scheitelbrechwertmesser mit schwenkbarer Glasauflage jedoch nicht erlangt.

Ein Grund hierfür dürfte der komplizierte Aufbau sowie der weiterhin systematische Meßfehler liefernde ungeänderte strahlengang, der für die Fernscheitel-Brechwertmessung bestimmt ist, sein.

Weiterhin ist aus der US-A-1 726 820 ein Scheitelbrechwertmesser bekannt, der die Bestimmung der Ferngebrauchswirkung und zusätzlich der Bildfehler im Randbereich des Brillenglases erlaubt. Ein weiterer Scheitelbrechwertmesser ist aus der US-A-1 542 112 bekannt. Beide Geräte weisen jedoch einen Parallelstrahlengang auf der Objektseite des Brillenglases auf. Elemente zur Änderung der objektseitigen Vergenz des Lichtstrahles sind nicht vorgesehen, so daß eine präzise Bestimmung des Nahscheitelbrechwertes nicht möglich ist.

Der Erfindung liegt die Aufgabe zugrunde, eine Einrichtung zur Messung der Refraktionseigenschaften von Brillengläsern anzugeben, die zusätzlich zur Bestimmung des Fernscheitelbrechwertes auch die Bestimmung des sogenannten Nahscheitel-Brechwertes, genauer gesagt, des effektiven Nah-Gebrauchswertes erlaubt.

Überraschenderweise gelingt eine Lösung dieser Aufgabe dadurch, daß weiterhin von einer Einrichtung gemäß dem Oberbegriff des Patentanspruchs 1 ausgegangen und diese Einrichtung durch die im kennzeichnenden Teil des Patentanspruchs 1 angegebenen Merkmale weitergebildet wird.

Erfindungsgemäß ist der Strahlengang der Einrichtung entsprechend der gewünschten Objektentfernung veränderbar. Bei "Objektentfernung unendlich" ist der Strahlengang bei den meisten Einrichtungen gemäß dem Oberbegriff des Patentanspruchs 1, jedoch nicht notwendigerweise, ein paralleler Strahlengang. Zur Messung des Nahscheitel-Brechwertwerts bzw. des effektiven Gebrauchwertes wird die Vergenz des Strahlengangs für Objektentfernung unendlich so geändert, daß er der Gebrauchsstellung entspricht. Hierzu wird der parallele Strahlengang durch Verschieben der Projektionsoptik und/oder Einbringen von Zusatzlinsen in einen divergenten Strahlengang (Nahvergenz) überführt.

Um das Brillenglas mit diesem der Gebrauchsstellung entsprechenden Strahlengang zu beaufschlagen ist die feststehende Glasauflage so ausgebildet, daß das Brillenglas im Strahlengang entsprechend der Gebrauchsstellung "schräg zum Strahlengang" angeordnet ist.

Die sich durch die "schräge" Anordnung des Brillenglases im Strahlengang bei der Nahscheitelmessung ergebende Abweichung wird durch einen im Strahlengang angeordneten Dioptrien- und/oder Prismenausgleich, beispielsweise eine Linse oder ein kleines zusätzliches Prisma kompensiert.

Hierdurch erhält man ohne Schwenkvorrichtung, d.h. ohne bewegte Teile die Möglichkeit, mit einer Einrichtung zur Messung der Refraktionseigenschaften von Brillengläsern gemäß dem Oberbegriff des Patentanspruchs 1 ohne systematischen Meßfehlern den effektiven Gebrauchswert der Brillengläser für Nahentfernungen zu bestimmen.

Weiterbildungen der Erfindung sind in den abhängigenansprüchen angegeben.

Besonders vorteilhaft ist es, wenn der Dioptrien und/oder Prismenausgleich in die Glasauflage integriert ist. Hierdurch ist nicht nur eine enge räumliche Zuordnung zwischen dem zu messenden Brillenglas und dem Dioptrien und/oder Prismenausgleich gewährleistet, darüberhinaus können auch die Glasauflage sowie die zugehörigen Ausgleichselemente in einem Arbeitsgang ausgetauscht werden (Anspruch 3).

Die erfindungsgemäße Weiterbildung einer Einrichtung gemäß dem Oberbegriff des Patentanspruchs 1 läßt sich in Verbindung mit den verschiedensten Scheitelbrechwertmessern verbinden. Die Scheitelbrechwertmesser können beispielsweise Projektions-Scheitelbrechwertmesser, aber auch Scheitelbrechwertmesser sein, die die Refraktionseigenschaften automatisch bestimmen (Anspruch 4 bzw. 5) oder zumindest digital anzeigen.

In jedem Falle ist es aber gemäß Anspruch 6 vorteilhaft, wenn Sensoren die Vergenz des Lichtstrahls und-/oder die in den Strahlengang eingesetzte Glasauflage und/oder die eingesetzten Ausgleichselemente erfassen. Beispielsweise bei einem automatischen Scheitelbrechwertmesser können die Ausgangssignale dieser Sensoren dazu verwendet werden, das Meßergebnis entsprechend der gewünschten Nahentfernung zu korrigieren. Auch bei einem von Hand zu betätigendem Scheitelbrechwertmesser, bei dem lediglich die Anzeige automatisch erfolgt, kann mittels der Ausgangssignale der Sensoren die Anzeige auf den Nahscheitel-Brechwert umgeschaltet werden. Weiterhin ist es gemäß Anspruch 7 vorteilhaft, wenn der Prismenausgleich beispielsweise dadurch, daß ein Herschel-Kompensator vorgesehen wird, variabel gestaltet ist.

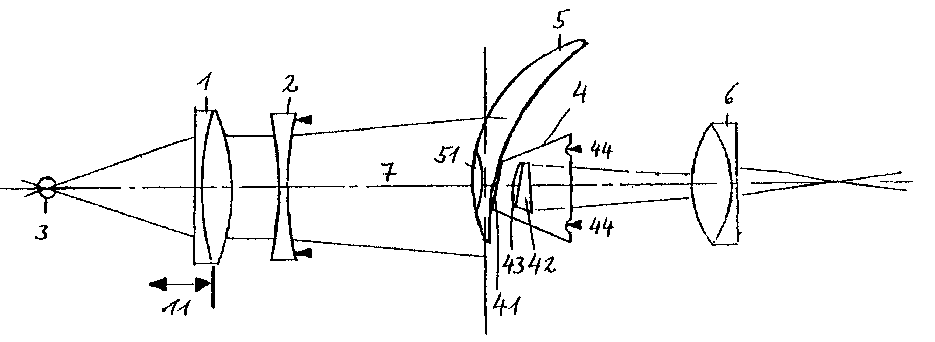

Die Erfindung wird nachstehend anhand von Ausführungsbeispielen unter Bezugnahme auf die Zeichnung näher beschrieben,

deren einzige Figur eine Optikskizze eines erfindungsgemäß weitergebildeten Scheitelbrechwertmessers zeigt.

Eine Linse 1 mit positiver Brechkraft bildet zusammen mit einer Linse 1 mit negativer Brechkraft einen Kollimator für das Licht einer nicht näher dargestellten Lichtquelle 3. Die Vergenz des Lichtbündels nach der Linse 2 kann beispielsweise durch Verschieben der Linse 1 in Richtung eines Pfeils 11 und/oder durch Austauschen der Linse 2 oder durch Einsetzen einer zusätzlichen, nicht dargestellten Linse in den Strahlengang geändert werden. Nicht dargestellte Sensoren, die beispielsweise die Stellung der Linse 1 erfassen, teilen der ebenfalls nicht dargestellten Auswerteeinheit mit, welche Vergenz der Strahlengang während der Messung hat.

Im Strahlengang nach der Linse 2 ist ein Glashalter bzw. eine Glasauflage 4 für ein Brillenglas 5, beispielsweise ein Zweistärkenglas angeordnet. Das durch das Brillenglas 5 und den Glashalter 4 hindurchtretende Licht wird von einer weiteren Linse 6 auf eine nicht dargestellte Lichtempfangseinrichtung projiziert.

Die Glasauflage 4 weist eine geneigte Auflagefläche 41 auf, so daß das Brillenglas 5 mit seinem Nahteil 51 unter einem bestimmten Neigungswinkel zur optischen Achse 7 auflegbar ist. In die Glasauflage 4 ist ein austauschbarer Dioptrien- und/oder Prismenausgleich integriert, der beispielsweise aus einem Prisma 42 und-/oder einer Linse 43, die wahlweise einzeln oder gemeinsam in den Strahlengang einbringbar sind, besteht.

Ferner weist die Glasauflage Aussparungen 44 auf, in die Sensoren, beispielsweise Mikroschalter eingreifen. Je nach Stellung der Mikroschalter wird eine nicht im einzelnen dargestellte Auswerteeinheit mit Signalen beaufschlagt, die der Auswerteeinheit die Ausbildung der im Strahlengang befindlichen Glasauflage 4, also den Neigungswinkel des Brillenglases, sowie die Dioptrien- und/oder Prismenkorrektur mitteilen.

In der nachfolgendern Tabelle sind exemplarisch für bestimmte Dioptrien-Bereiche der Brillengläser 4 der Neigungswinkel des Brillenglases gegenüber der Horizontalen, das Auflagemaß, die prismatischen Nebenwirkungen sowie das Prisma für Ausführungsbeispiele von erfindungsgemäßen Glasauflagen angegeben.

| dpt-Bereich | Auflage Aufmaß | Neigungs-winkel | Prismat. Nebenwirk. | Prisma cm/m |
|---|---|---|---|---|
| -7 bis +8 | 2.1 | 16° | -10 bis +10 | 0 |
| +10 bis +16 | 2,75 | 22° | +11 bis +20 | 15 |
| +16 bis +20 | 2,9 | 23,5° | +20 bis +25 | 20 |
| -8 bis -14 | 1,35 | 9,4° | -10 bis -20 | 15 |
| -14 bis -16 | 0,8 | 6° | -17 bis -22 | 20 |

Die Glasauflage kann so ausgebildet sein, daß ihr Neigungswinkel verstellbar ist und die verschiedensten Korrekturelemente an ihr angebracht werden können.

**Patentansprüche**

1. Einrichtung zur Messung der Refraktionseigenschaften von Brillengläsern, bei der eine Projektionsoptik das Licht einer Lichtquelle über eine Feldblende mit einer Meßfigur und das auf einer Glasauflage, die zum Auflegen des Brillenglases mit seiner augenseitigen Fläche vorgesehen ist, angeordnete Brillenglas auf eine Lichtempfangseinrichtung projiziert, und aus dem Bildort der Meßfigur in Lateral- und/oder Longitudinalrichtung die Refraktionseigenschaften bestimmbar sind,
**gekennzeichnet** durch die Kombination folgender Merkmale:
(a) Elemente (1) der Projektionsoptik sind derart verschiebbar und/oder Zusatzlinsen in den Strahlengang derart einbringbar, daß die Vergenz des Lichtstrahls auf der Objektseite des Brillenglases zwischen einer Stellung, in der sie zur Messung der Refraktionseigenschaften für unendliche Objektentfernung Null ist, und wenigstens einer Stellung änderbar ist, in der sie zur Ermittlung der Refraktionseigenschaften für endliche Objektentfernungen ungleich Null ist,
(b) die Glasauflage (4) ist feststehend angeordnet und so ausgebildet, daß das Brillenglas (5) im Strahlengang definiert anhebbar und schrägstellbar ist, und
(c) in den Strahlengang ist auf der Seite der augenseitigen Fläche ein einem bestimmten Doptrien-Meßbereich angepaßter Dioptrien und/oder Prismenausgleich (42, 43) für schräggestellte Brillengläser einbringbar.
2. Einrichtung nach Anspruch 1,
dadurch **gekennzeichnet**, daß der Dioptrien- und/oder Prismenausgleich (42, 43) in die Glasauflage (4) integriert ist.
3. Einrichtung nach Anspruch 1 oder 2,
dadurch **gekennzeichnet**, daß die Glasauflage (4) austauschbar ist und eine Reihe von Glasauflagen mit unterschiedlichem Neigungswinkel sowie gegebenenfalls Dioptrien- und/oder Prismenausgleich in den Strahlengang einbringbar sind.
4. Einrichtung nach einem der Ansprüche 1 bis 3,
dadurch **gekennzeichnet**, daß die Lichtempfangseinrichtung ein Fernrohr oder eine Mattscheibe ist.
5. Einrichtung nach einem der Ansprüche 1 bis 3,

dadurch **gekennzeichnet**, daß die Lichtempfangseinrichtung ein Detektorarray ist, aus dessen Ausgangssignal eine Auswerteeinheit unter Berücksichtigung der objektseitigen Vergenz des Lichtstrahles die Refraktionseignenschaften bestimmt.

6. Einrichtung nach Anspruch 5,

**gekennzeichnet** durch Sensoren, die die Vergenz des Lichtstrahles und/oder die in den Strahlengang eingesetzte Glasauflage erfassen, und deren Ausgangssignal an die Auswerte-Einheit angelegt ist.

7. Einrichtung nach einem der Ansprüche 1 bis 6,

dadurch **gekennzeichnet**, daß die Höhe und/oder Neigung der Glasauflage verstellbar sind, und daß die Glasauflage mit einem Prismenkompensator verbindbar ist.


## Claims

1. A device for the measurement of the refraction properties of ophthalmic lenses whereby a projection optical system projects the light of a light source over a field occluder with a measuring target and the ophthalmic lens positioned on a lens support provided for the support of the lens on its back surface onto a light receiving device, and where the refraction properties can be determined from the image position of the measuring target in a lateral and/or longitudinal direction,

**characterized** by the combination of the following features:

(a) Elements (1) of the projection optical system can be moved in such a way and/or additional lens elements can be introduced into the ray path in such a way that the vergence of the light ray on the object side of the ophthalmic lens can be adjusted between one position where it is zero for the measurement of the refraction properties for infinite object distance and at least one position where it is other than zero to determine the refraction properties for finite object distances,

(b) The lens support (4) is in a fixed position and designed in such a way that the ophthalmic lens (5) can be raised and tilted in a defined manner in the ray path, and

(c) On the side of the back surface a dioptre and/or prism compensator (42, 43), which has been adapted to a certain dioptre measuring range, for tilted ophthalmic lenses can be introduced into the beam path.

2. A device according to claim 1,

**characterized** by the fact that the dioptre and/or prism compensator (42, 43) is integrated in the lens support (4).

3. A device according to claims 1 or 2,

**characterized** by the fact that the lens support (4) can be replaced and that a series of lens supports with varying angles of tilt and where possible with dioptre and/or prism compensators can be introduced into the ray path.

4. A device according to any of claims 1 to 3,

**characterized** by the fact that the light receiving device is a telescope or a ground-glass screen.

5. A device according to any of claims 1 to 3,

**characterized** by the fact that the light receiving device is a detector array whose output signal is used by an evaluation unit to determine the refraction properties while taking into account the vergence of the light ray on the object side.

6. A device according to claim 5,

**characterized** by sensors which register the vergence of the light ray and/or the lens support positioned in the ray path and whose output signal is supplied to the evaluation unit.

7. A device according to any of the claims 1 to 6,

**characterized** by the fact that the height and/or tilt of the lens support can be adjusted and that the lens support can be connected to a prism compensator.


## Revendications

1. Dispositif pour mesurer les propriétés de réfraction de verres de lunettes, dans lequel une optique de projection projette sur un dispositif récepteur de lumière la lumière provenant d'une source lumineuse en passant par un diaphragme de champ comportant une figure ou un graphique pour la mesure ainsi que le verre de lunettes, disposé sur un support de verre qui est prévu pour que le verre de lunettes y soit placé avec sa surface côté oeil, et permettant de déterminer les propriétés de réfraction à partir de la position de l'image de la figure pour mesure, ou mire, dans le sens latéral et/ou longitudinal,

dispositif caractérisé par la combinaison des caractéristiques suivantes :

(a) des éléments (1) de l'optique de projection peuvent être déplacés par coulissement et/ou des lentilles supplémentaires peuvent être introduites dans le trajet des rayons de façon que la vergence du rayon lumineux sur le côté objet du verre de lunettes puisse être modifiée entre une position dans laquelle elle est nulle pour la mesure des propriétés de réfraction pour une distance de l'objet à l'infini et au moins une autre position dans laquelle elle n'est pas nulle pour la détermination des propriétés de réfraction d'objets éloignés d'une distance finie,

(b) le support (4) des verres est monté fixe et réalisé de façon que le verre (5) de lunettes puisse être soulevé et placé incliné, de manière bien définie, dans le trajet des rayons, et

(c) on peut introduire dans le trajet des rayons, du côté de la surface correspondant à l'oeil, un dispositif compensateur (42, 43) de dioptries et/ou à prisme(s) correspondant à un domaine déterminé de mesure de dioptries pour des verres de lunettes placés inclinés.

2. Dispositif selon la revendication 1,
caractérisé en ce que le dispositif compensateur (42, 43) de dioptries et/ou à prisme(s) est intégré au support (4) de verre.

3. Dispositif selon la revendication 1 ou 2,
caractérisé en ce que le support (4) de verre peut être remplacé, et l'on peut introduire et placer sur le trajet des rayons toute une série de supports de verre ayant un angle différent d'inclinaison et comportant éventuellement un dispositif compensateur de dioptries et/ou à prisme(s).

4. Dispositif selon l'une des revendications 1 à 3,
caractérisé en ce que le dispositif récepteur de lumière est un télescope ou un verre dépoli.

5. Dispositif selon l'une des revendications 1 à 3,
caractérisé en ce que le dispositif récepteur de lumière est un réseau détecteur,émettant un signal de sortie à partir duquel une unité d'exploitation détermine les propriétés de réfraction, en tenant compte de la vergence, côté objet, du rayon lumineux.

6. Dispositif selon la revendication 5,
caractérisé en ce qu'il comporte des capteurs,qui décèlent la vergence du rayon lumineux et/ou le support de verre placé dans le trajet des rayons, et dont le signal de sortie est envoyé à l'unité d'exploitation.

7. Dispositif selon l'une des revendications 1 à 6,
caractérisé en ce qu'on peut régler la hauteur et/ou l'inclinaison du support de verre et en ce que le support de verre peut être relié à un compensateur à prisme(s).